# EUROPEAN PATENT SPECIFICATION

(11) **EP 0 512 640 B1**
(45) Date of publication and mention of the grant of the patent: **28.02.1996**
(21) Application number: 92201258.8
(22) Date of filing: 05.05.1992
(51) Int. Cl.: B23D 59/00, B27B 5/06

(54) **Board sawing apparatus.**
Platten-Sägegerät
Appareil pour le sciage de panneaux

(30) Priority: 06.05.1991 NL 9100778
(43) Date of publication of application: 11.11.1992
(73) Proprietor: ELCON MACHINEFABRIEK B.V., NL-2451 VZ Leimuiden (NL)
(72) Inventor: Meijer, Pieter, NL-2451 VZ Leimuiden (NL)
(74) Representative: van der Arend, Adrianus G.A., Ir.

(56) References cited:
- DD-A- 122 216
- DE-A- 1 528 001
- FR-A- 2 506 208
- GB-A- 2 139 556
- US-A- 4 241 505

## Description

The invention relates to a sawing apparatus as described in the precharacterizing portion of claim 1.

A sawing apparatus of this type is disclosed by GB-A-2139556. A frame of the prior art apparatus is bounded by two vertical columns and two horizontal girders connected firmly at the lower and upper ends of the vertical columns. A guide post is arranged through the intermediary of rollers and rails on the two horizontal girders so that the guide post can be moved in a first (horizontal) direction along the total length of the frame. A sawing unit is attached to the guide post. The sawing unit is slidable in a second (substantially vertical) direction perpendicular to said first direction along the guide post. In addition the sawing unit can be pivoted over 90°, so that the circular saw blade assumes a horizontal or vertical cutting position. A suction nozzle of a housing of the sawing unit covering the sawing blade is connected to vacuum extraction means. A horizontal exhaust duct, or extraction channel, is guided with vertical sliding mobility on the two columns of the frame. The exhaust duct is provided with a slot extending along the total length of the exhaust duct for receiving therein an end part of the circular sawing blade which has passed a board to be sawn positioned and supported between the sawing unit and the exhaust duct. Both the sawing unit and the exhaust duct are engaged by cables and counter weights to compensate the weight of the sawing unit and for easily manually guiding the sawing unit along the guide post, and for maintaining the horizontal exhaust duct at a position opposite the sawing unit while keeping the sawing blade received in the exhaust duct.

With the prior art apparatus a board to be sawn is supported on rollers arranged on the lower horizontal girder and an upper edge part of the board is clamped by clamp claws arranged on the upper girder. In this position the board lies against, or is supported by the horizontal exhaust duct. In the reference it is considered that such construction provides a poor supporting of the board. Therefore, preferably, the exhaust duct is provided with a plurality of support arms, extending from the duct to above only, and the upper girder is provided with similar support arms extending from the girder downwards between the support arms attached to the exhaust duct. The length of the support arms is about one third of the frame height. The support arms are intended to provide additional support to the board to be sawn. However these support arms provide only additional support for an upper part of the board, i.e. above a saw cut to be made. The support for the lower part of the board, below the saw cut, remains poor. Another drawback is that the height at which the horizontal saw cut can be made is limited by the presence of the supporting arms.

For making a vertical saw cut in the board, the board needs to be moved from said frame with the horizontal exhaust duct to a complementary auxiliary device having a fixed vertical channel with a vertical slot for passing through a sawing blade of an auxiliary sawing device, the latter channel being connected to vacuum extraction means. This makes the whole arrangement for making horizontal as well vertical saw cuts very large, taking much valuable room in a working place, and makes the whole arrangement even more complex and expensive.

From DE-A-1528001 there is known a sawing apparatus having slightly inclined posts for supporting a board to be sawn against it. At the lower end of each of post there is provided a roller. The board is supported on several, but not all, of said rollers. At the upper part of the frame of this prior art apparatus there are arranged first guide means, a coupling part and second guide means and a sawing unit connected to the second guide means as with the apparatus described in the precharacterizing portion of claim 1. With this prior art apparatus there is connected a guiding member having run-on edges extending parallel to the board. Each post is provided at the upper end thereof with an additional roller at such a height to only engage a run-on edge if the post and the guiding member are aligned and such roller and the guiding member are pushed against each other. If a roller of a post is engaged by the guiding member when displacing the guiding member horizontally the post is forced downwards and backwards, the latter movement providing room for moving the sawing unit vertically without the sawing blade interfering with such post lying opposite it. The posts are moved downwards and backwards against the force of springs arranged between the frame and the posts.

The prior art apparatus disclosed by DE-A-1528001 is not provided with saw dust extraction means.

With the art apparatus disclosed by DE-A-1528001 the springs arranged between the frame and the posts must be rather strong, since it must be prevented that the weight of a board to be sawn only can have the result that the posts are pushed backwards, instead of only by the guiding member pushing against the upper end of the post of concern. Therefore said springs must be designed for even the heaviest allowed board and/or board with maximum allowable dimensions, requiring relatively strong springs with respect to situations in which just light weighted or small boards need to be sawn. Also, if the springs are insufficient strong the board to be sawn, supporting on rollers at the lower ends of the posts, can inadvertently move downwards, making a selected or adjusted height of the sawing cut less accurate, or making sawing even hazardous because of the poor support. Since during sawing the sawing blade exerts a force also against the working of said springs, the design of the arrangement and the tension of the springs should have taken into account such sawing forces, which are dependent on the materials to be sawn and the type of the saw blade and which are therefore at the long term unpredictable. Therefore this prior art apparatus is difficult to design, complex, difficult to maintain, difficult to use when sawing light or small boards, and expensive to manufacture.

It is an object of the invention to solve the drawbacks mentioned above.

Said object is according to the invention obtained by a sawing apparatus having the features of claim 1.

Each of the plurality of supporting members, distributed across a board to be sawn needs only to be designed to be able to support a board area supported by it. Therefore, if such supporting member is spring loaded, the spring need not to be as strong as with the prior art. The extraction channel can move very smoothly and easily, without applying great forces, between the supporting means and the board to be sawn, while pushing the supporting members out of its way when engaging them. The board to be sawn will not move inadvertently in any direction enabling sawing cuts, which accurately follow predetermined or selected trajectories on the board. A sawing cut can be made across virtually the whole area bounded by the frame.

The invention is explained with reference to the drawings. In the drawings:
Fig. 1 shows in perspective a part of a sawing apparatus according to the invention;
Fig. 2 shows, on a larger scale, a part of supporting means of the apparatus shown in Fig. 1;
Fig. 3 shows an alternative embodiment for the supporting means shown in Fig. 2;
Fig. 4 shows a cross-section of the apparatus shown in Fig. 1 along the line IV-IV, in which a board is placed;
Fig. 5 shows a cross-section like that of Fig. 4 of another embodiment of the apparatus according to the invention.

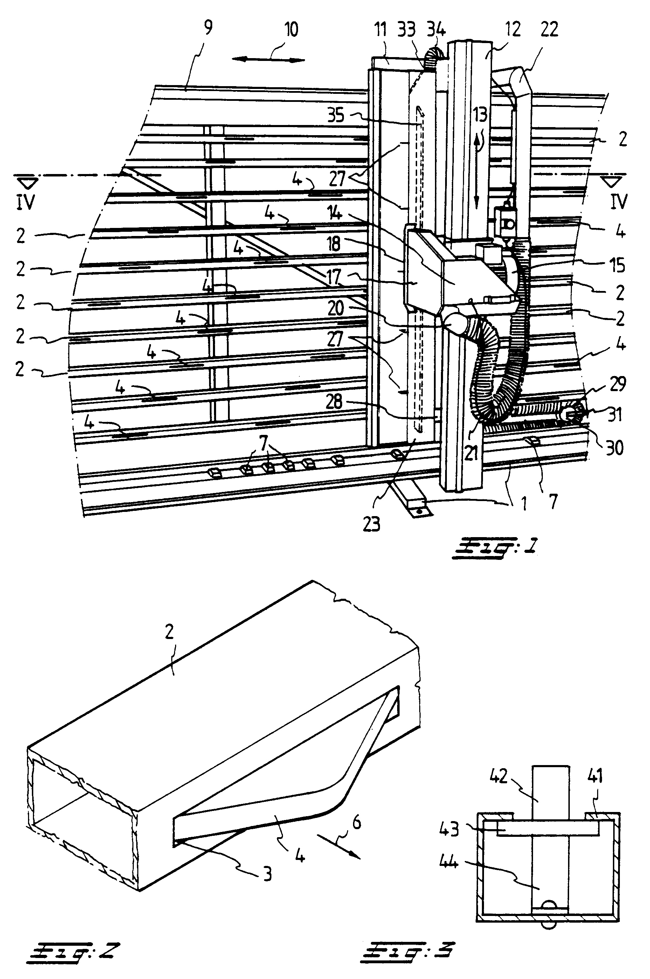

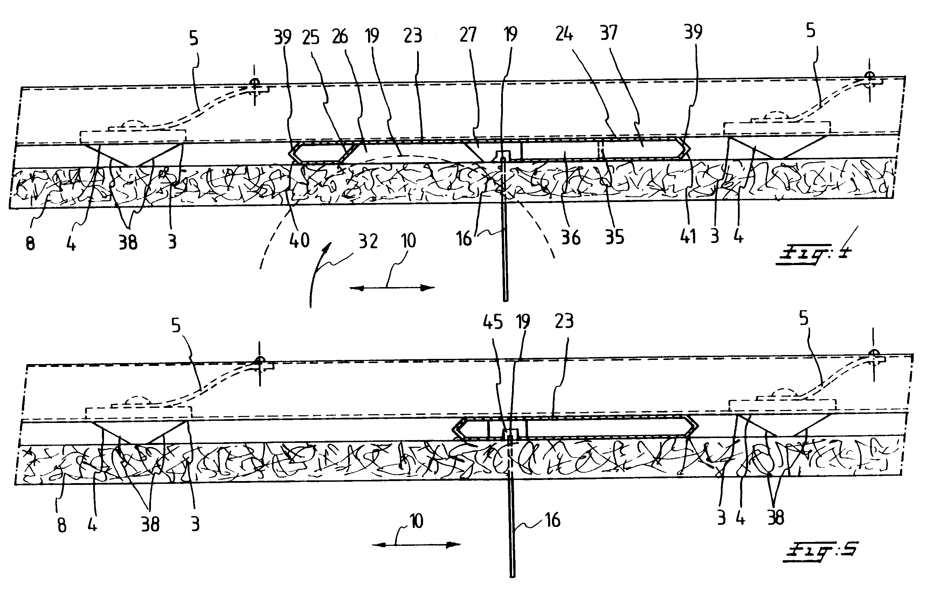

The apparatus shown in Fig. 1 comprises a frame 1 on which a number of horizontally running rectangular tubes 2 are disposed above one another. Elongated openings 3 are formed at regular intervals in the tubes 2. Through each opening 3 projects a supporting element 4 which is pretensioned by means of spring means, such as a leaf spring 5 (Figs. 4 and 5) in the direction indicated by the arrow 6 (Fig. 2). A board 8 (not shown in Fig. 1, but shown in Figs. 4 and 5) can be placed on movable supporting blocks 7 against the supporting elements 4. The tubes 2 and the supporting elements 4 are disposed in such a way that the board 8 runs essentially vertically.

Hereinafter, the side of the board 8 resting against the supporting elements 4 is called the rear side, and the other side of the board 8 is called the front side.

Guide means 9, which are suitable for moving a coupling part 11 in a first direction, indicated by the double arrow 10, are provided at the top side of the frame 1. Connected to the coupling part 11 are second guide means 12, which are suitable for moving a machine saw 14, which can be locked to the second guide means 12, in a second direction, indicated by the double arrow 13. The machine saw 14 comprises a motor 15 for driving a circular saw blade 16 (Figs. 4 and 5), situated in an essentially closed housing 17. At the side of the tubes 2 the housing 17 has an opening 18 through which an end part 19 of the saw blade 16 projects. The housing 17 has a tubular connection piece 20 which is connected by means of a hose 21, a tube 22 and a pipe (not shown) to extraction means (not shown). The result is that during the sawing of the board 8 particles of the board released at the front side of the board 8 can be extracted efficiently by the extraction means.

An elongated extraction channel 23, running opposite the second guide means 12, is also fixed on the coupling part 11. The extraction channel 23 is bounded (Fig. 4) by an elongated chamber 24 and a wall part 25 with an elongated space or opening 26 between them which is suitable for receiving therein the end part 19 of the saw blade 16. In the extraction channel in the vicinity of the end part 19 of the saw blade 16 provision is made for short partitions 27 which prevent deformation of the chamber 24 during sawing, and which ensure a good seal between the rear side of the board 8 and the walls of the channel 23 lying against it. When the machine saw 14 makes a vertical saw cut, particles from the board 8 escaping at the rear side of the board 8 will essentially fall downwards. In most cases it is therefore sufficient to provide a connection opening 28 at the bottom side of the extraction channel 23, which opening is connected by means of a hose 29 to extraction means which can be the same extraction means as those with which particles of the board 8 released at the front side of the board 8 are extracted. By means of a guide roller 30 and a pull cord 31, to which pulling means (not shown), for example spring-loaded means, are connected, the hose 29 can be held in the orientation shown in Fig. 1, in which the hose 28 does not go in the way of the board 8 or of the machine saw 14.

When the machine saw 14 is rotated through 90° for making a horizontal saw cut, in which the saw blade 16 (also) turns in the direction indicated by the arrow 32 (Fig. 4), particles of the board released at the rear side of the board 8 will be thrown both downwards and upwards. In this embodiment of the device it is therefore preferable to provide a connection piece 33 also on the top side of the extraction channel 23, connected by means of a hose 34 to the extraction means.

In an alternative embodiment a vertical partition 35 is fitted in the channel, dividing the channel on either side of the partition 35 into 2 sub-channels 36, 37. The partition 35 does not run right to the bottom side or right to the top side of the extraction channel 24. When the suction opening 28 and the hose 29 connected to it are not provided (the channel is closed at the position of the opening 28), use of the partition 35 will mean that extraction takes place both at the bottom side and at the top side.

The supporting elements 4 have run-on surfaces 38 opposite the rear side of the board 8. The extraction channel 23 has run-on surfaces 39 opposite the tubes 2. When the part of the sawing apparatus, comprising the coupling part 11, the guide means 12 with the machine saw 14 and the extraction channel 23, is moved in the direction of the arrow 10, the supporting elements 4 will be moved away from the rear side of the board 8 when the run-on surfaces 38 of the supporting elements 4 and the run-on surfaces 39 of the extraction channel 23 push against each other, with the result that the above-mentioned part of the device can pass the pushed-away supporting elements 4.

The extraction channel 23 and the partitions 27 have run-on surfaces 40, 41 respectively opposite the board 8, by means of which a board 8, which may not be entirely flat, can be pushed easily over the supporting elements 4 and the extraction channel 23 prior to sawing.

Various modifications are possible within the scope of the invention. For example, Fig. 3 shows an alternative to the tubes 2 with supporting elements 4. According to Fig. 3, C-sections 41 are used instead of tubes, through which sections supporting elements 42 project, which elements are retained on the inside of the section 41 by shoulders 43 of the supporting elements 42, while the supporting elements 42 are pressed in the direction of the board 8 by means of a leaf spring 44.

Other spring-loaded means can, of course, also be used instead of the leaf springs 5 and 44.

Instead of the supporting elements 4 and 42, it is also possible to use hinged elements which are forced by spring means in the direction of the board 8, and which can be turned by the extraction channel 23 out of its way.

The extraction channel 23 can also have a number of connection openings distributed in direction 13, which are connected to the extraction means. A better distribution of the suction force in the direction 13 can be obtained in this way. A valve can be fitted in the connection between a connection opening and the suction means, for shutting off said connection if the board to be sawn is not in the vicinity of the connection opening.

The extraction channel 23 can also be divided, for example by means of partitions like the partition 35, into a number of sub-channels which, on the one hand, open out at various levels into the elongated opening 26 and, on the other hand, can open out at one or more connection openings distributed in the direction 13.

It is also possible to make the extraction channel 23 symmetrical relative to the saw blade 16.

If the sawing apparatus is intended only for making vertical saw cuts, the embodiment shown in Fig. 5 can be used, with a narrow elongated opening 45 instead of the wide elongated opening 26 of Fig. 4.

It is also possible within the scope of the invention for the sawing apparatus to be intended only for making horizontal saw cuts, in which case the machine saw 14 can be securely fixed to the guide means 12.

The sawing apparatus can also be designed for supporting and sawing a board in any direction between vertical and horizontal.

In an apparatus according to the invention it is possible to select a direction of rotation of the saw blade 16 which is opposite to the direction 32. Then too, the particles released from the board 8 can be extracted efficiently both at the front side and at the rear side of the board 8.

## Claims

1. Sawing apparatus, comprising a frame (1) with means (2, 4, 7, 41, 42) for supporting flat on or against it a board (8) to be sawn, the frame (1) having first guide means (9) which are designed for supporting and guiding in a first direction (10) a coupling part (11) to which are coupled second guide means (12) designed for supporting and guiding a machine saw (14) in a second direction (13) crossing the first direction (10), both directions (10, 13) running parallel to the board (8), so that the machine saw (14) can be moved in a plane running parallel to a rear or front main side of the board (8) and that during operation of the machine saw (14) a saw blade (16) thereof, according to the movement of the machine saw (14), can make a saw cut through the board (8) from a front side of the board (8), and extraction means with a suction nozzle (18) provided at the front side of the board for extracting particles of the board (8) released during the sawing, whereby an extraction channel (23) which is coupled to the second guide means (12) extends parallel to one of said directions and, after positioning, behind the board (8), which channel (23) is connected to an inlet of the extraction means and which has an elongated opening (26) extending along the channel (23) and in the vicinity of a saw cut to be made, for the extraction of particles released from the board (8) at the rear side of the board (8) at the saw cut, and the supporting means (2, 4, 7, 41, 42) have supporting elements (4, 42) which are designed for supporting the rear side of the board (8), **characterized in that** the extraction channel (23) is coupled to the coupling part (11), each supporting element (4, 42) has dimensions which are minor with respect to maximum allowed dimensions of the main sides of the board (8), the supporting elements (4, 42) are distributed across a supporting area of the supporting means, each supporting element (4, 42) is movable in a third direction crossing the board (8), and by that, viewed in the first direction (10), before and after the channel stop means (39) are present on the channel (23) which on movement of the machine saw (14) in the first direction (10) move supporting elements (4, 42) which push against the stop means (39) in the third direction away from the board (8), in order to allow passage of the channel (23) and the stop means (39).

2. Sawing apparatus according to claim 1, **characterized in that** each supporting element is an element (4, 42) which is pretensioned against a spring force of spring-loaded means (44).

3. Sawing apparatus according to claim 1 or 2, **characterized in that** each supporting element is an element which is hinged to the frame (9) and turns away from the board (8) when it is hit by the stop means (39).

4. Sawing apparatus according to any of the preceding claims, **characterized in that** each supporting element (4, 42) and/or the stop means (39) which can push against the supporting element (4, 42) have run-on surfaces (38, 39) which gradually push the supporting element (4, 42) away from the board (8) when they are encountered.

5. Sawing apparatus according to any of the preceding claims, **characterized in that** the supporting element (4, 42) and stop means (39) have run-on surfaces (38, 40, 41) which push an edge of the board (8) knocking against them away from said run-on surfaces (38, 40, 41).

6. Sawing apparatus according of any of the preceding claims, **characterized in that** the machine saw (14) can be turned over 90° and over an axis crossing the board (8) and the opening (26) of the channel (23) extends so far in the first direction (10) that the machine saw (14) can make a saw cut in the first direction (10).

7. Sawing apparatus according to any of the preceding claims, **characterized in that** the channel (23) has a number of connection openings distributed in the second direction (13) for connection to an inlet of the extraction means.

8. Sawing apparatus according to any of the preceding claims, in which the first and second directions (10, 13) are horizontal and vertical directions respectively, **characterized in that** the channel (23) has at least in a lower part thereof a connection opening (28) for connection to the extraction means.

9. Sawing apparatus according to any of the preceding claims, **characterized in that** the channel (23) has at each end thereof a connection opening (28, 33) for connection to an inlet of the extraction means.

10. Sawing apparatus according to any of the preceding claims, **characterized in that** the channel (23) is divided into a number of sub-channels extending in the second direction (13), which sub-channels open out at various locations of the elongated opening (26) of the channel (23) and are connected to one or more connection openings distributed in the second direction (13), for connection to an inlet of the extraction means.

11. Sawing apparatus according to claim 10, **characterized in that** the channel (23) is provided with a partition (35) extending from one end of the channel (23) across part of the channel (23) viewed in the second direction (13), and the extraction means being connected to said one end of the channel (23).

## Patentansprüche

1. Sägegerät, das einen Rahmen (1) mit Mitteln (2, 4, 7, 41, 42) umfaßt, um eine zu sägende Platte (8) flach darauf oder dagegen zu stützen, wobei der Rahmen (1) erste Führungsmittel (9) besitzt, die zum Stützen und zum Führen eines Kopplungsteils (11) in einer ersten Richtung (10) bestimmt sind, an welches zweite Führungsmittel (12) gekoppelt sind, die zum Stützen und Führen einer Maschinensäge (14) in einer zweiten Richtung (13) quer zur ersten Richtung (10) bestimmt sind, wobei beide Richtungen (10, 13) parallel zu der Platte (8) verlaufen, so daß die Maschinensäge (14) in einer Ebene bewegt werden kann, die parallel zur hinteren oder vorderen Hauptseite der Platte (8) verläuft, und daß während des Betriebs der Maschinensäge(14) ein Sägeblatt (16) von dieser, entsprechend der Bewegung der Maschinensäge (14), einen Schnitt durch die Platte (8) von der Vorderseite der Platte (8) her ausführen kann, und Absaugmittel mit einer Saugdüse (18) zum Absaugen von Partikln der Platte (8), die während des Sägens freigesetzt werden, an der Vorderseite des Bretts bereitgestellt sind, wobei ein Absaugkanal (23), der an die zweiten Führungsmittel (12) gekoppelt ist, parallel zu einer der Richtungen und, nach dem Positionieren, sich hinter der Platte (8) erstreckt, der Kanal (23) mit einem Einlaß der Absaugmittel verbunden ist und der Kanal eine längliche Öffnung (26), die sich entlang des Kanals (23) und in der Nähe eines auszuführenden Schnitts erstreckt, zum Absaugen der von der Platte (8) an der Rückseite der Platte (8) bei dem Schnitt freigesetzten Partikel besitzt, und die Stützmittel (2, 4, 7, 41, 42) Stützelemente (4, 42) aufweisen, die zum Stützen der Rückseite der Platte (8) bestimmt sind, dadurch gekennzeichnet, daß der Absaugkanal (23) an das Kopplungsteil (11) gekoppelt ist, jedes Stützelement (4, 42) Abmessungen hat, die in bezug auf die maximal erlaubten Abmessungen der Hauptseiten der Platte (8) klein sind, die Stützelemente (4, 42) über die Stützfläche der Stützmittel verteilt sind, jedes Stützelement (4, 42) in einer dritten Richtung quer zur Platte (8) beweglich ist, und dadurch, daß in der ersten Richtung (10) gesehen vor und nach dem Kanal Anschlagmittel (39) am Kanal (23) vorhanden sind, die bei Bewegung der Maschinensäge (14) in der ersten Richtung (10) die Stützelemente (4, 42) bewegen, welche in der dritten Richtung von der Platte (8) weg gegen die Anschlagmittel (39) drücken, um das Passieren des Kanals (23) und der Anschlagmittel (39) zu gestatten.

2. Sägegerät nach Anspruch 1, dadurch gekennzeichnet, daß jedes Stützelement ein Element (4, 42) ist, das gegen eine Federkraft von Federmitteln (44) vorgespannt ist.

3. Sägegerät nach Anspruch 1 oder 2, dadurch gekennzeichnet, daß jedes Stützelement ein Element ist, das an dem Rahmen (9) gelenkig angebracht ist und sich von der Platte (8) wegdreht, wenn es von den Anschlagmitteln (39) getroffen wird.

4. Sägegerät nach einem der vorhergehenden Ansprüche, dadurch gekennzeichnet, daß jedes Stützelement (4, 42) und/oder die Anschlagmittel (39), die gegen das Stützelement (4, 42) drücken können, Auflaufflächen (38, 39) aufweisen, die das Stützelement (4, 42) allmählich von der Platte (8) wegdrücken, wenn sie angetroffen werden.

5. Sägegerät nach einem der vorhergehenden Ansprüche, dadurch gekennzeichnet, daß das Stützelement (4, 42) und die Anschlagmittel (39) Auflaufflächen (38, 40, 41) aufweisen, die eine Kante der gegen sie stoßenden Platte (8) von den Auflaufflächen (38, 40, 41) wegdrücken.

6. Sägegerät nach einem der vorhergehenden Ansprüche, dadurch gekennzeichnet, daß die Maschinensäge (14) um 90° und um eine Achse quer zur Platte (8) gedreht werden kann und sich die Öffnung (26) des Kanals (23) so weit in der ersten Richtung (10) erstreckt, daß die Maschinensäge (14) einen Schnitt in der ersten Richtung (10) ausführen kann.

7. Sägegerät nach einem der vorhergehenden Ansprüche, dadurch gekennzeichnet, daß der Kanal (23) eine Anzahl von in der zweiten Richtung (13) verteilten Verbindungsöffnungen zur Verbindung mit einem Einlaß der Absaugmittel besitzt.

8. Sägegerät nach einem der vorhergehenden Ansprüche, bei welchem die erste und zweite Richtung (10, 13) die horizontale bzw. vertikale Richtung ist, dadurch gekennzeichnet, daß der Kanal (23) wenigstens in seinem unteren Teil eine Verbindungsöffnung (28) zur Verbindung mit den Absaugmitteln besitzt.

9. Sägegerät nach einem der vorhergehenden Ansprüche, dadurch gekennzeichnet, daß der Kanal (23) an jedem Ende eine Verbindungsöffnung (28, 33) zur Verbindung mit einem Einlaß der Absaugmittel besitzt.

10. Sägegerät nach einem der vorhergehenden Ansprüche, dadurch gekennzeichnet, daß der Kanal (23) in eine Anzahl von sich in der zweiten Richtung (13) erstreckenden Unterkanälen unterteilt ist, die Unterkanäle sich an verschiedenen Stellen der länglichen Öffnung (26) des Kanals (23) öffnen und mit einer oder mehreren in der zweiten Richtung (13) verteilten Verbindungsöffnungen zur Verbindung mit einem Einlaß der Absaugmittel verbunden sind.

11. Sägegerät nach Anspruch 10, dadurch gekennzeichnet, daß der Kanal (23) mit einer Trennwand (35) versehen ist, die sich von einem Ende des Kanals (23) über einen Teil des Kanals (23), in der zweiten Richtung (13) gesehen, erstreckt, und wobei die Absaugmittel mit dem einen Ende des Kanals (23) verbunden sind.

## Revendications

1. Appareil de sciage comprenant un châssis (1) pourvu de moyens (2,4,7,41,42) pour supporter un panneau (8) à scier,à plat sur lesdits moyens ou contre eux, le châssis (1) comportant des premiers moyens de guidage (9) qui sont prévus pour supporter et guider dans une première direction (10) un élément de liaison (11) auquel sont couplés des deuxièmes moyens de guidage (12) prévus pour supporter et guider une scie à moteur (14) dans une deuxième direction (13) croisant la première direction (10), ces deux directions (10,13) étant parallèles au panneau (8), de sorte qu'on peut déplacer la scie (14) dans un plan parallèle à une face principale arrière ou avant du panneau (8) et que, pendant le fonctiuonnement de la scie (14), sa lame de scie (16) peut effectuer, conformément au mouvement de la scie (14), une coupe de sciage à travers le panneau (8) à partir d'une face avant du panneau (8), et des moyens d'extraction comportant une buse d'aspiration (18) prévue du côté avant du panneau pour extraire les particules du panneau (8) libérées pendant le sciage, de sorte qu'un canal d'extraction (23) qui est fixé aux deuxièmes moyens de guidage (12) s'étend parallèlement à une desdites directions et, après positionnement derrière le panneau (8), ce canal (23) est raccordé à une entrée des moyens d'extraction et il présente une ouverture allongée (26) s'étendant le long du canal (23) et au voisinage d'une coupe de sciage à effectuer, pour l'extraction des particules détachées du panneau (8) du côté arrière du panneau (8) à l'endroit de la coupe de sciage, et les moyens de support (2,4,7,41,42) comprennent des éléments d'appui (4,42) qui sont prévus pour supporter la face arrière du panneau (8), caractérisé en ce que le canal d'extraction (23) est fixé à l'élément de liaison (11), chaque élément d'appui (4,42) a des dimensions qui sont faibles par rapport aux dimensions maximales possibles des grandes faces du panneau (8), les éléments d'appui (4,42) sont répartis sur une zone d'appui des moyens de support, chaque élément d'appui (4,42) est déplaçable dans une troisième direction croisant le panneau (8), et en ce que, avant et après le canal, vu dans la première direction (10), des moyens de butée (39) sont présents sur le canal (23) et, lors du mouvement de la scie (14) dans la première direction (10), ils déplacent les éléments d'appui (4,42), qui viennent en contact avec les moyens de butée (39), dans la troisième direction d'éloignement par rapport au panneau (8), afin de permettre le passage du canal (23) et des moyens de butée (39).

2. Appareil de sciage suivant la revendication 1, caractérisé en ce que chaque élément d'appui est un élément (4,42) qui est mis en précharge par une force élastique de moyens chargés par ressort (44).

3. Appareil de sciage suivant la revendication 1 ou 2, caractérisé en ce que chaque élément d'appui est un élément qui est articulé sur le châssis (9) et qui pivote de manière à s'écarter du panneau (8) lorsqu'il est frappé par les moyens de butée (39).

4. Appareil de sciage suivant une quelconque des revendications précédentes, caractérisé en ce que chaque élément d'appui (4,42) et/ou les moyens de butée (39) qui peuvent pousser l'élément d'appui (4,42) présentent des surfaces de rampe (38,39) qui poussent progressivement l'élément d'appui (4,42), lorsqu'elles le rencontrent, pour l'éloigner du panneau (8).

5. Appareil de sciage suivant une quelconque des revendications précédentes, caractérisé en ce que l'élément d'appui (4,42) et les moyens de butée (39) présentent des surfaces de rampe (38,40,41) que poussent un bord du panneau (8) qui les heurte, pour l'éloigner dedites surfaces de rampe (38,40,41).

6. Appareil de sciage suivant une quelconque des revendications précédentes, caractérisé en ce que la scie à moteur (14) peut être basculée de 90° autour d'un axe croisant le panneau (8), et l'ouverture (26) du canal (23) s'étend assez loin dans la première direction (10) pour que la scie (14) puisse effectuer une coupe dans la première direction (10).

7. Appareil de sciage suivant une quelconque des revendications précédentes, caractérisé en ce que le canal (23) comporte une pluralité d'orifices de raccordement répartis dans la deuxième direction (13), pour connexion à une entrée des moyens d'extraction.

8. Appareil de sciage suivant une quelconque des revendications précédentes, dans lequel les première et deuxième directions (10,13) sont les directions horizontale et verticale respectivement, caractérisé en ce que le canal (23) comporte au moins dans sa partie inférieure un orifice de raccordement (28) pour connexion aux moyens d'extraction.

9. Appareil de sciage suivant une quelconque des revendications précédentes, caractérisé en ce que le canal (23) comporte, à chacune de ses extrémités, un orifice de raccordement (28,33) pour connexion à une entrée des moyens d'extraction.

10. Appareil de sciage suivant une quelconque des revendications précédentes, caractérisé en ce que le canal (23) est divisé en un certain nombre de sous-canaux s'étendant dans la deuxième direction (13), ces sous-canaux débouchant à divers endroits de l'ouverture allongée (26) du canal (23) et étant connectés à un ou plusieurs orifices de raccordement répartis dans la deuxième direction (13), pour connexion à une entrée des moyens d'extraction.

11. Appareil de sciage suivant la revendication 10, caractérisé en ce que le canal (23) comporte une cloison (35) s'étendant à partir d'une extrémité du canal (23) sur une partie du canal (23) vu dans la deuxième direction (13), les moyens d'extraction étant connectés à la dite une extrémité du canal (23).
